# EUROPEAN PATENT APPLICATION

(11) **EP 4 174 671 A1**
(43) Date of publication of application: **03.05.2023**
(21) Application number: 22198718.3
(22) Date of filing: 29.09.2022
(51) Int. Cl.: G06F 15/78, G06F 9/50

(54) **METHOD AND APPARATUS WITH PROCESS SCHEDULING**

(30) Priority: 26.10.2021 KR 20210143828
(71) Applicant: Samsung Electronics Co., Ltd., Gyeonggi-do 16677 (KR)
(72) Inventor: Tai, Yongmin, 16678 Suwon-si, Gyeonggi-do (KR); Shin, Youngsam, 16678 Suwon-si, Gyeonggi-do (KR)
(74) Representative: Grünecker Patent- und Rechtsanwälte PartG mbB

(57) **Abstract**

A method and apparatus with process scheduling is provided. The method includes receiving operation requests from a plurality of processes; determining priority information of a plurality of near memory processors based on predetermined state information of a plurality of memories which correspond to the plurality of near memory processors; allocating the received operation requests to at least one near memory processor based on the determined priority information; and updating state information of at least one memory of the plurality of memories corresponding to the at least one near memory processor in a state table.

## Description

### BACKGROUND

### 1. Field

The following description relates to a method and apparatus with process scheduling.

### 2. Description of Related Art

Recently, interest in artificial intelligence has increased in various diverse industries including financial and medical industries as well as information technology (IT) industries. Deep learning, which is a field of artificial intelligence, may refer to technology that learns a deep neural network in which a number of layers of an existing neural network is increased and may use the deep neural network for user recommendation, pattern recognition, or inference, for example.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The present invention is claimed in the independent claims. Preferred embodiments are specified in the dependent claims.

In a general aspect, a processor-implemented process scheduling method includes receiving operation requests from a plurality of processes; determining priority information of a plurality of near memory processors based on predetermined state information of a plurality of memories which correspond to the plurality of near memory processors; allocating the received operation requests to at least one near memory processor of the plurality of near memory processors based on the determined priority information; and updating state information of at least one memory of the plurality of memories corresponding to the at least one near memory processor in a state table.

The plurality of memories may include at least one of a memory rank, a memory bank, a dual in-line memory module (DIMM), and a single in-line memory module (SIMM).

The state information comprises state information regarding the plurality of near memory processors which respectively correspond to each of the plurality of memories.

The state information may include at least one of priority information, write state information, read state information, operation size information, required operation time information, operation target data identification information, memory temperature information, and/or channel information.

The priority information may include information that is determined based on at least one of the write state information, the read state information, the required operation time information, the operation size information, the memory temperature information, and/or the channel information.

The priority information may include information that is determined by assigning a weight to the write state information and the read state information.

The allocating of the operation requests to the at least one near memory processor comprises allocating the operation requests to a near memory processor. of the plurality of near memory processors configured to end first an operation request currently being processed based on required operation time information, when all near memory processors are performing an operation.

The allocating of the received operation requests to the at least one near memory processor comprises allocating the received operation requests to a near memory processor, based on channel information of each of at least two near memory processors, when the at least two near memory processors have a same priority based on priority information of the at least two memory processors.

The allocating of the received operation requests to the at least one near memory processor may include determining a near memory processor among the plurality of near memory processors to process the received operation requests based on write information and read information of the plurality of near memory processors; and allocating the received operation requests to the determined near memory processor.

The plurality of processes may include processes to which a plurality of batches divided from a received job request is respectively allocated.

The batch may be configured to have a size that is determined based on size information of the received job request and resource information of the at least one memory.

The method may include by a near memory processor, of the at least one near memory processor, to which the operation request is allocated, performing a write operation and a read operation in a memory of the plurality of memories corresponding to the near memory processor.

The performing of the write operation and the performing of the read operation comprise, by the near memory processor, performing a write operation of a second process that is a succeeding process before a last read operation of a first process that is a preceding process.

The method may include storing an operation request of the received operation requests in a scheduler, comprising at least a memory, when a size of the operation request is less than a predetermined size.

The allocating of the received operation requests to the at least one near memory processor based on the determined priority information may include allocating at least one operation request of the process to at least one near memory processor when a number of the plurality of near memory processors is greater than a number of the plurality of processes.

In a general aspect, an apparatus includes a processor configured to: receive operation requests from a plurality of processes; determine priority information of a plurality of near memory processors based on predetermined state information of a plurality of memories which correspond to the plurality of near memory processors; allocate the received operation requests to at least one near memory processor based on the determined priority information; and update state information of at least one memory of the plurality of memories corresponding to the at least one near memory processor in a state table.

The apparatus may be an electronic device.

In a general aspect, an apparatus includes a scheduler including at least a memory; and one or more processors configured to: divide a job request into a plurality of batches corresponding to a plurality of processes and allocate the plurality of processes to a plurality of near memory processors based on a state table of the scheduler, wherein the allocating the plurality of processes to the plurality of near memory processors comprises: receiving state information of each of the plurality of near memory processors from the scheduler; and determining a near memory processor to which an operation request of one of the plurality of processes is to be allocated based on write state information and read state information of the plurality of near memory processors.

The determined near memory processor may be configured to perform a write operation of a second process that is a succeeding process before a last read operation of a first process that is a preceding process.

The read operation and the write operation may be performed simultaneously.

Other features and aspects will be apparent from the following detailed description, the drawings, and the claims.

### BRIEF DESCRIPTION OF DRAWINGS

FIG. 1 illustrates an example method of scheduling a plurality of processes, in accordance with one or more embodiments.
FIGS. 2A and 2B illustrate examples of a state table, in accordance with one or more embodiments.
FIG. 3 illustrates an example scheduler, in accordance with one or more embodiments.
FIG. 4 illustrates an example operation process in a double buffer, in accordance with one or more embodiments.
FIG. 5 is a flowchart illustrating an example process scheduling method, in accordance with one or more embodiments.
FIG. 6 illustrates an example write operation of a near memory processor, in accordance with one or more embodiments.
FIG. 7 illustrates an example read operation of a near memory processor, in accordance with one or more embodiments.
FIG. 8 illustrates an example process scheduling method when an instruction size is small, in accordance with one or more embodiments.
FIG. 9 illustrates an example process scheduling method when a number of processes is less than a number of memories, in accordance with one or more embodiments.
FIG. 10 illustrates an example process scheduling method when all near memory processors are performing an operation, in accordance with one or more embodiments.
FIG. 11 illustrates an example process scheduling method when a plurality of near memory processors has the same priority, in accordance with one or more embodiments.

Throughout the drawings and the detailed description, unless otherwise described or provided, the same drawing reference numerals will be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness, noting that omissions of features and their descriptions are also not intended to be admissions of their general knowledge.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

Throughout the specification, when an element, such as a layer, region, or substrate is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there can be no other elements intervening therebetween.

The terminology used herein is for the purpose of describing particular examples only, and is not to be used to limit the disclosure. As used herein, the singular forms "a," "an," and "the" are intended to include the plural forms as well, unless the context clearly indicates otherwise. As used herein, the term "and/or" includes any one and any combination of any two or more of the associated listed items. As used herein, the terms "include," "comprise," and "have" specify the presence of stated features, numbers, operations, elements, components, and/or combinations thereof, but do not preclude the presence or addition of one or more other features, numbers, operations, elements, components, and/or combinations thereof.

In addition, terms such as first, second, A, B, (a), (b), and the like may be used herein to describe components. Each of these terminologies is not used to define an essence, order, or sequence of a corresponding component but used merely to distinguish the corresponding component from other component(s).

Unless otherwise defined, all terms, including technical and scientific terms, used herein have the same meaning as commonly understood by one of ordinary skill in the art to which this disclosure pertains and after an understanding of the disclosure of this application. Terms, such as those defined in commonly used dictionaries, are to be interpreted as having a meaning that is consistent with their meaning in the context of the relevant art and the disclosure of this application, and are not to be interpreted in an idealized or overly formal sense unless expressly so defined herein.

In an example, a processor, e.g., one or more processors, of an electronic device may execute, for example, instructions (e.g., coding) and may control at least one another component (e.g., hardware component or software component) of the electronic device, and may perform various data processing or other operations as non-limiting examples. In an example, as at least a portion of data processing or other operations, the processor may store an instruction or data received from another component in a volatile memory, may process the instruction or the data stored in the volatile memory, and may store result data in a nonvolatile memory. In an example, the processor may include a main processor (e.g., a central processing device and an application processor) or an auxiliary processor (e.g., a graphical processing device, a neural processing unit (NPU), an image signal processor, a sensor hub processor, and a communication processor) operable independently from or together with the main processor. For example, when the electronic device includes the main processor and the auxiliary processor, the auxiliary processor may be set to use less power than that of the main processor or to specialize in a specified function. The auxiliary processor may be implemented separate from or as a portion of the main processor. Herein, it is noted that use of the term 'may' with respect to an example or embodiment, e.g., as to what an example or embodiment may include or implement, means that at least one example or embodiment exists where such a feature is included or implemented while all examples and embodiments are not limited thereto.

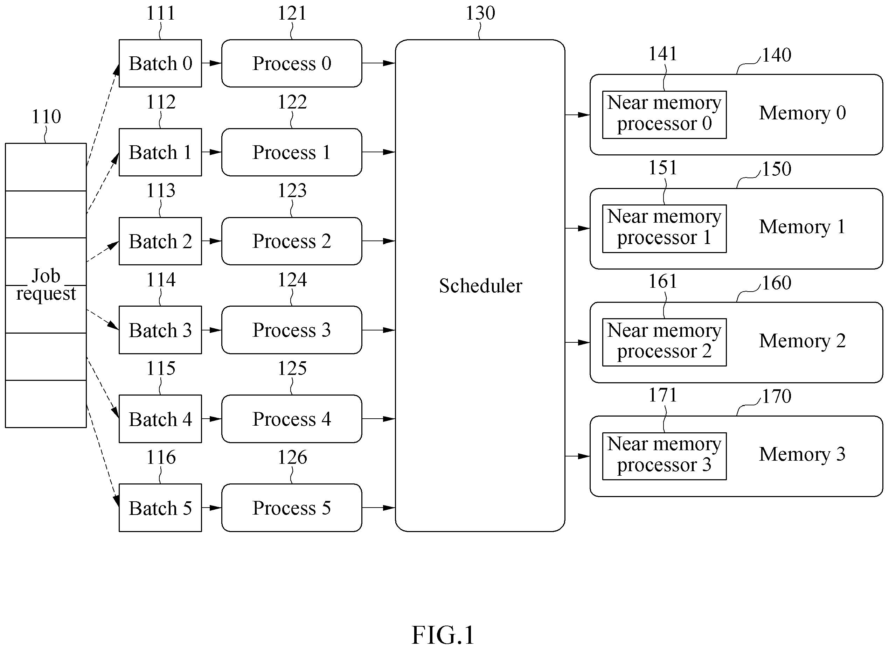

FIG. 1 illustrates an example method of scheduling a plurality of processes, in accordance with one or more embodiments.

FIG. 1 illustrates a job request 110, a plurality of batches 111, 112, 113, 114, 115, and 116, a plurality of processes 121, 122, 123, 124, 125, and 126, a scheduler 130, a plurality of memories 140, 150, 160, and 170, and a plurality of near memory processors 141, 151, 161, and 171 respectively corresponding to the plurality of memories 140, 150, 160, and 170.

In an example, a processor may receive an operation request from each of the plurality of processes 121, 122, 123, 124, 125, and 126. In an example, the process used herein may refer to instructions that are continuously, or over a period of time, executed in a computer. In another example, a process may refer to a unit of a job to which a system resource is allocated from an operating system (OS). The process may include at least one thread. In an example, the thread may refer to a unit of several flows that are executed in the process. The thread is a flow of several executions that operate in a single process and may be executed while sharing an address space or resources in the process between threads in the same process. In an example, a separate stack may be allocated to each thread in the process, and code data and a heap area may be shared.

In an example, a plurality of processes may include processes to which a plurality of batches divided from the job request 110 is respectively allocated. As a non-limited example, the job request 110 used herein may refer to a program, e.g., written by a user to run on a computer and input data used to execute the program. The processor may divide the job request 110 into the plurality of batches, and simultaneously process the same. That is, the processor may perform a multi-process operation of dividing a single job request 110 into the plurality of batches, allocating the plurality of batches to the plurality of processes, and then performing simultaneous processing.

In an example, a plurality of batches may have different sizes. In an example, embedding lookup operation requests transmitted from the processes 121, 122, 123, 124, 125, and 126 to the near memory processors 141, 151, 161, and 171 may have different computation amounts (e.g., a number of indices in a lookup table). That is, since the number of indices in the lookup table that is a target of embedding lookup operation may all be different, a size of a batch may need to be changed.

In an example, a batch may include a batch having a size that is determined based on size information of the job request 110 and resource information of a memory. In an example, a size of data that may be stored in a memory may be limited. Since the size of data may be limited, a size of a batch may need to be determined based on resource information of the memory. Therefore, the processor may determine the size of the batch that may be stored in the memory based on the resource information of the memory. Additionally, the processor may also determine the size of the batch that may be processed by a near memory processor based on the resource information of the memory. Accordingly, the processor may perform errorless processing on the job request 110 through a multi-process manner by determining the size of the batch that does not exceed the limit of the memory.

In an example, an operation request may include a deep learning operation request. The deep learning operation request may include an operation request necessary for the learning of a deep learning model or inference implementing the deep learning model. The deep learning operation request may include, for example, an embedding lookup operation request. Embedding lookup may refer to searching for and computing an index selected from a lookup table in which large-sized list-format data is stored. In an example, embedding lookup operation may refer to, when the processor selects indices 1, 3, 6, 8, and 10, finding embedding vectors corresponding to the indices 1, 3, 6, 8, and 10 from the lookup table and then performing the operation thereof. The near memory processor 1 151 may concatenate the embedding vectors corresponding to the indices 1, 3, 6, 8, and 10. In another example, the near memory processor 1 151 may sum up the embedding vectors corresponding to the indices 1, 3, 6, 8, and 10. The aforementioned deep learning operation request is provided as an example only and the examples are not limited thereto.

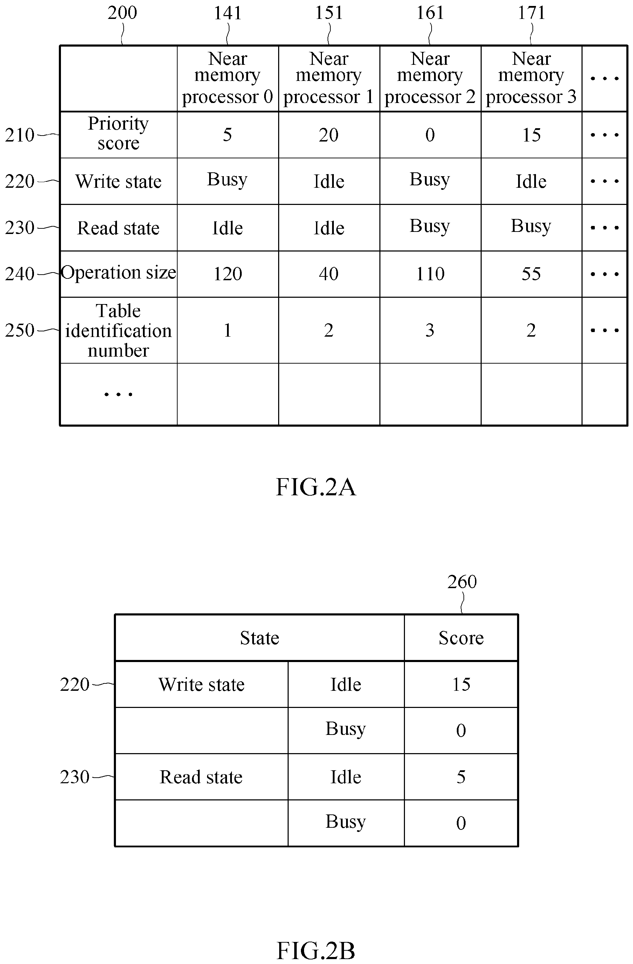

In an example, the processor may allocate operation requests to at least one near memory processor based on priority information. In another example, the processor may allocate an operation request to a near memory processor based on priority information among the plurality of near memory processors 141, 151, 161, and 171 using the scheduler 130 that includes a memory state table. The memory state table is further described below with reference to FIG. 2.

In an example, the scheduler 130 may include a processing circuitry configured to determine to which near memory processor operation requests received from the plurality of processes 121, 122, 123, 124, 125, and 126 are to be allocated to perform an operation. The scheduler 130 may include the memory state table. In an example, the memory state table may refer to a table that stores state information of a near memory processor corresponding to each memory. The processor may determine a near memory processor to process an operation request by implementing the scheduler 130 that includes the memory state table.

In an example, a memory may refer to a set that includes at least one memory chip. The memory may include at least one of a memory rank, a memory bank, a dual in-line memory module (DIMM), and a single in-line memory module (SIMM). In an example, the memory rank may refer to a single block or area generated using a portion or all of a memory chip in a single memory module. In an example, a single rank may refer to a data block of a 64-bit range. If a single chip = 8 bit, the single rank may include eight chips. If a single chip = 4 bit, the single rank may include 16 chips. A plurality of ranks may be present in a single DIMM. In an example, the memory bank may refer to a memory slot. The memory bank may refer to a set of memory chips connected to the same control line to be simultaneously accessible. In an example, the DIMM may refer to a memory module in which a plurality of DRAM chips is mounted on a circuit board and may be used as a main memory of a computer. The DIMM may include a plurality of ranks.

In an example, priority information may include information about suitability of each near memory processor in processing a current operation request. In an example, the priority information, as priority information about each of the plurality of near memory processors 141, 151, 161, and 171, may include information regarding how suitable a corresponding near memory processor is for processing an operation request. The priority information may include priority score of each of the plurality of near memory processors 141, 151, 161, and 171. A near memory processor with higher priority score is more likely to process the operation request. A method of determining, by the processor, a near memory processor to process an operation request based on priority information is further described below with reference to FIG. 2.

Deep learning may be beneficial in improving the performance of processors that perform an operation.

In one or more embodiments, the data communication amount between a memory and a processor are improved, in an example in which a memory and a processor are separated.

In an example, the processor may allocate the operation request to the determined near memory processor and may update state information of at least one memory corresponding to at least one near memory processor in a state table (e.g., a state table 200 of FIG. 2A). In an example, the processor may allocate the operation request to the near memory processor 1 151 corresponding to the memory 1 150. The near memory processor 1 151 may correspond to a near memory processor with highest priority score. The processor may determine that the near memory processor 1 151 processes the operation request implementing the scheduler 130. The processor may allocate the operation request to the near memory processor 1 151 and may update state information about the near memory processor 1 151. The processor may change write state information of the near memory processor 1 151 from an idle state to a busy state. In another example, the processor may change read state information of the near memory processor 1 151 from an idle state to a busy state.

In an example, to increase a deep learning operation speed, only operation results may be received from a memory after performing a deep learning operation using not the processor (e.g., a CPU and an MPU) but an operator (e.g., a near memory processor) connected to each memory by connecting the operator to each memory. This configuration may be referred to as near memory processing. The near memory processing may accelerate an operation speed, for example, in such a manner that a processor (e.g., a CPU) implements a near memory operator in a memory (e.g., a rank, a bank, and a DIMM). That is, the near memory processing may reduce a bandwidth by adding an operator device to each memory to prevent an increase in the bandwidth when reading or writing a large amount of data from or to a memory, or may accelerate the operation speed by decreasing latency.

However, there may be a program that operates by generating a plurality of processes (or threads). When the plurality of processes is generated and each process issues an instruction with a different size to a near memory processor present in a memory, a processing time of each near memory processor may vary. In this, a method of determining a near memory processor for each process and then performing an operation may be inefficient in terms of an overall operation time. In an example, if a computation amount performed by one instruction for a near memory processor is different, an execution time of each of the plurality of near memory processors may differ. Although operation requests are simultaneously input to all near memory processors, a time at which a corresponding operation ends may vary. In an example, a required operation time of the near memory processor 0 141 may be 6 and a required operation time of the near memory processor 1 151 may be 10. In this example, the near memory processor 0 141 may wait until an operation of the near memory processor 1 151 ends. That is, an idle time of 4 may occur in the near memory processor 0 141. Therefore, it may be desirable to efficiently determine to which near memory processor an operation request received from a process is to be given. Accordingly, a method of determining a near memory processor to which an operation request is to be allocated based on state information of each near memory processor may be expected to reduce an idle time of each near memory processor and thereby achieve an increase in utilization of a near memory processor and a decrease in an operation time of a near memory processor.

FIGS. 2A and 2B illustrate examples of a state table, in accordance with one or more embodiments.

FIG. 2A illustrates the state table 200, the near memory processors 141, 151, 161, and 171, priority score 210, a write state 220, a read state 230, an operation size 240, and a table identification number 250.

In an example, the state table 200 may include state information related to a plurality of near memory processors respectively corresponding to memories. In an example, the state information may refer to information about current states of the near memory processors 141, 151, 161, and 171 respectively corresponding to the individual memories. The processor may generate priority information based on the state information. Additionally, the processor may determine a near memory processor to process an operation request based on the priority information.

In an example, the state information may include at least one of priority information, write state information, read state information, operation size information, required operation time information, operation target data identification information, memory temperature information, and channel information.

In an example, the priority information may include information necessary to determine a near memory processor to process an operation request. The priority information may include the priority score 210, and the processor may determine a near memory processor to process an operation request based on the priority score 210. In an example, the priority score 210 of the near memory processor 0 141 may be 5, the priority score 210 of the near memory processor 1 151 may be 20, the priority score 210 of the near memory processor 2 161 may be 0, and the priority score 210 of the near memory processor 3 171 may be 15. The processor may allocate an operation request to the near memory processor 1 151 with the highest priority score 210.

In an example, the write state information may include information regarding whether a near memory processor is performing a write operation in a memory. In an example, when the near memory processor 0 141 is performing a write operation in the memory 0 140, the write state 220 may be a "Busy" state. In an example, when the near memory processor 1 151 is not performing a write operation in the memory 1 150, the write state 220 may be an "Idle" state.

In an example, the read state information may include information regarding whether a near memory processor is performing a read operation in a memory. In an example, when the near memory processor 2 161 is performing a read operation in the memory 2 160, the read state 230 may be a "Busy" state. In another example, when the near memory processor 1 151 is not performing a read operation in the memory 1 150, the read state 230 may be an "Idle" state.

In an example, the operation size information may include information about a size of operation to be performed by a near memory processor. The size of the operation may be determined based on a size of a batch allocated to a process. In an example, the size of the operation may be determined based on a number of indices referenced in a lookup table that is a target of operation. The operation size information may include the operation size 240, and the near memory processor 0 141 may be performing an operation with the operation size 240 of 120.

In an example, the operation time information may include time information calculated based on the operation size information. In an example, operation time information may include time information calculated based on the operation size information. The processor may calculate the required operation time information based on the operation size information, resource state information of a memory, and resource state information of a near memory processor.

In an example, the operation target data identification information may include information that identifies a plurality of tables divided from a single operation request. The operation request may be divided into the plurality of tables and may thereby be allocated to the plurality of near memory processors. Therefore, each piece of table identification information may be used in an example to aggregate operation results by the plurality of near memory processors. In an example, each piece of table may be required or necessary to aggregate operation results by the plurality of near memory processors. In an example, the operation target data identification information may include the table identification number 250 that is a target of operation. Still referring to FIG. 2A, table identification numbers 1, 2, and 3 may represent table 1, table 2, and table 3 that are operation targets, respectively. Table 1, table 2, and table 3 may be tables that are targets of an operation request of the process 1 122. The near memory processor 0 141 may operate operation target table 1, the near memory processor 1 151 may operate operation target table 2, and the near memory processor 2 161 may operate operation target table 3.

In an example, the operation target data identification information may include information to identify a plurality of tables divided from a single job request 110. As described above with reference to FIG. 1, the job request 110 may be divided into a plurality of batches. The plurality of batches may refer to the divided plurality of tables, respectively. Therefore, each piece of table identification information may be necessary to aggregate operation results by the plurality of near memory processors.

In an example, the memory temperature information may include information about each memory (or near memory processor). The processor may determine relatively low priority score for a near memory processor with relatively high temperature based on temperature information since an operation speed of the near memory processor with the high temperature may decrease. Therefore, an operation request of a process may selectively not be allocated to the near memory processor with relatively high temperature.

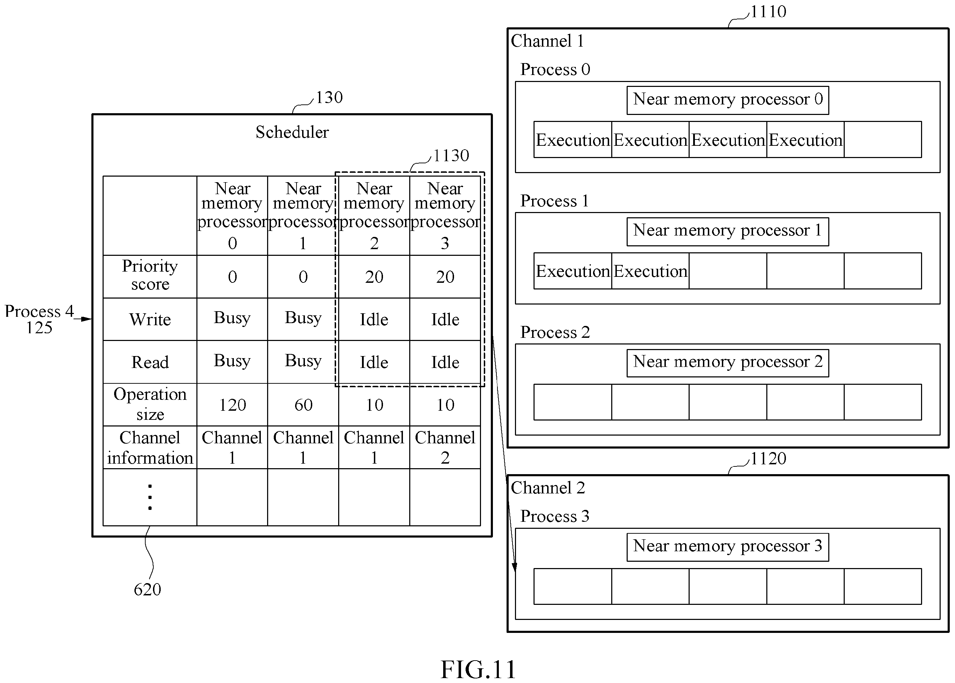

In an example, the channel information may include information about a channel connected to a memory. A memory channel may refer to a data transmission channel between a memory and a processor. In an example, at least one memory may be connected to a single channel. Additionally, the channel information may include memory slot information. A method of determining a near memory processor to process an operation request based on channel information is further described with reference to FIG. 11, as a non-limiting example.

In an example, the processor may include at least one of write state information, read state information, operation size information, required operation time information, operation target data identification information, memory temperature information, and channel information from a status register of a near memory processor.

In an example, the priority information may include information that is determined based on write state information, read state information, required operation time information, operation size information, memory temperature information and/or channel information. That is, the processor may consider the write state information, the read state information, the required operation time information, operation size information, the memory temperature information and/or the channel information when determining a near memory processor to process an operation request of a process.

In an example, the priority information may include information that is determined by assigning a weight to the write state information and the read state information. The processor may determine the priority information by assigning a relatively high weight to the write state information and the read state information rather than the required operation time information, the operation size information, the memory temperature information and/or the channel information. In another example, the processor may primarily calculate the priority score 210 based on the write state information and the read state information. That is, the processor may determine a near memory processor to which an operation request of a process is to be allocated based on the write state information and the read state information. In an example, all of the plurality of near memory processors may have the same priority score 210 based on the write state information and the read state information of the plurality of near memory processors. When all the near memory processors have the same priority score 210 based on the write state information and the read state information, the processor may determine a near memory processor to which an operation request of a process is to be allocated based on the required operation time information, the operation size information, the memory temperature information and/or the channel information.

FIG. 2B illustrates the write state 220, the read state 230, and score 260, in accordance with one or more embodiments.

Referring to FIG. 2B, in an example, if the write state 220 indicates an "Idle" state, the score 260 may be 15 points, if the write state 220 indicates a "Busy" state, the score 260 may be 0 points, if the read state 230 indicates an "Idle" state, the score 260 may be 5 points, and if the read state 230 indicates a "Busy" state, the score 260 may be 0 points. The score 260 may refer to an element score for each state used in a process of calculating the priority score 210. In an example, "priority score 210 = write state score + read state score." The processor may calculate the priority score 210 by summing up element scores for the respective states. In an example, Idle may represent that a write operation and/or a read operation is not being performed in a current memory. Additionally, "Busy" may represent that a write operation and/or a read operation is being performed in a current memory unit. In an example, Idle of the write state 220 may have a higher score than that of Idle of the read state 230. When a near memory processor performs an operation request of a process, the near memory processor may initially perform the write operation before the read operation. Therefore, the near memory processor may need to initially perform the write operation to perform the operation request. Therefore, if the write state 220 is Idle, it may represent that the near memory processor may currently immediately perform the operation request of the process. If the write state 220 is Busy and the read state 230 is Idle, it may represent that the near memory processor may not currently immediately perform the operation request of the process and may need to wait. Therefore, a determination of whether to currently perform the write operation may be more important in determining priority information rather than a determination of whether to currently perform the read operation.

In an example, the processor may determine a near memory processor to which an operation request of a process is to be allocated based on the write state information and the read state information. In an example, the priority score 210 of the near memory processor 0 141 in which the write state 220 indicates a "Busy" state and the read state 230 indicates an "Idle" state may be 5 points, the priority score 210 of the near memory processor 1 151 in which the write state 220 indicates an "Idle" state and the read state 230 indicates an "Idle" state may be 20 points, the priority score 210 of the near memory processor 2 161 in which the write state 220 indicates a "Busy" state and the read state 230 indicates a "Busy" state may be 0 points, and the priority score 210 of the near memory processor 3 171 in which the write state 220 indicates an "Idle" state and the read state 230 indicates a "Busy" state may be 15 points. That is, the processor may determine the priority score 210 based on the write state 220 and the read state 230. In this example, the processor may allocate the operation request of the process to the near memory processor 1 151 with the highest priority score 210.

In another example, the priority score 210 based on the write state information and the read state information may all be the same. In an example, all the near memory processors 141, 151, 161, and 171 may have the write state 220 of Busy and the read state 230 of Idle and may all have the same priority score 210 as 5 points accordingly. In this example, the processor may determine a near memory processor to which an operation request of a process is to be allocated based on the required operation time information, the operation size information, the memory temperature information and/or the channel information.

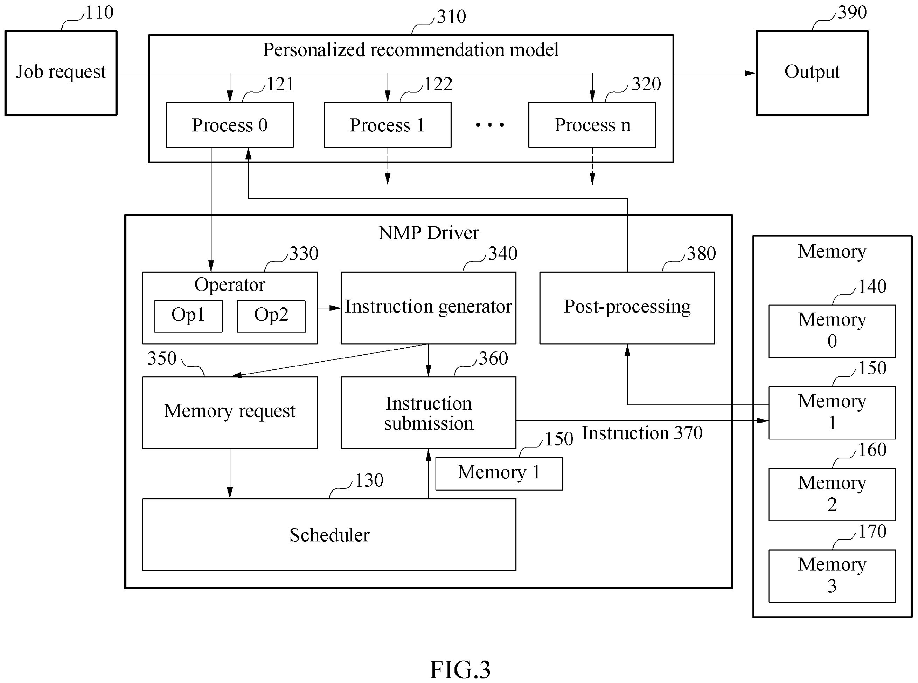

FIG. 3 illustrates an example scheduler, in accordance with one or more embodiments.

FIG. 3 illustrates the job request 110, a personalized recommendation model 310, the process 0 121, the process 1 122, a process n 320, an operator 330, an instruction generator 340, a memory request 350, an instruction submission 360, the scheduler 130, an instruction 370, a post-processing 380, a plurality of memories 140, 150, 160, and 170, and an output 390.

The personalized recommendation model 310 of FIG. 3 is provided as an example only and various types of deep learning models may apply. In an example, the personalized recommendation model 310 may refer to a model that recommends information suitable to the desires of a user to the user. The processor may provide recommendation information to the user using the personalized recommendation model 310 and, to accordingly, may need to perform a deep learning operation. The processor may divide the job request 110 into a plurality of batches and may allocate the plurality of batches to each of the plurality of processes. The operation request of the process 0 121 may be transmitted to the operator 330 of a near memory processor driver. The instruction generator 340 may generate an instruction based on information received from the operator 330. When the instruction is generated, the memory request 350 that receives information about a memory to be implemented for operation may be made to the scheduler 130. The processor may determine the memory 1 150 (or the near memory processor 1 151) to process the operation request of the process 0 121 by implementing the scheduler 130. That is, the processor may determine the memory 1 150 (or the near memory processor 1 151) to process the operation request of the process 0 121 based on the priority information. The processor may transmit the instruction 370 to the memory 1 150 that is to process the operation request. The near memory processor 1 151 connected to the memory 1 150 may process the operation request by executing the instruction 370 and may transmit operation results to the post-processing 380. The processor may transmit again data generated by the post-processing 380 to the process 0 121 and may acquire data of the output 390.

In an example, the scheduler 130 may include a memory to store or storing a state table, for example, the state table 200. The scheduler 130 may be processing circuitry, (e.g., as hardware, or a combination of hardware and instructions), that determines a near memory processor to process an operation request based on state information stored in the memory unit state table.

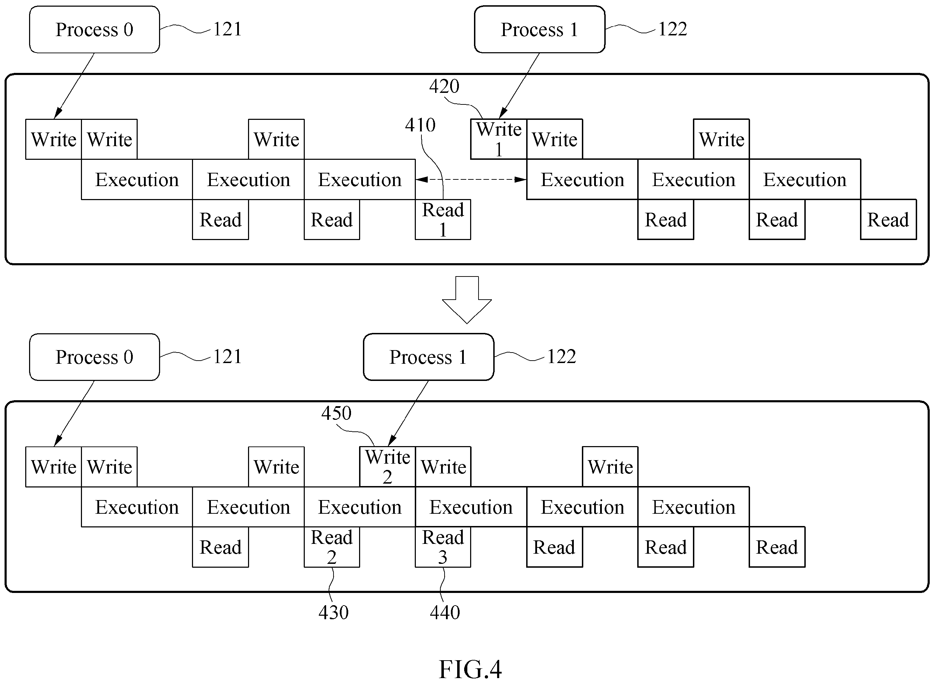

FIG. 4 illustrates an example operation process in a double buffer, in accordance with one or more embodiments.

FIG. 4 illustrates the process 0 121, the process 1 122, a read operation 1 410, write operation 1 420, a read operation 2 430, a read operation 3 440, and a write operation 2 450. In FIG. 4, execution and write and read operations may refer to an operation performed by a near memory processor.

In an example, the near memory processor may process an operation request of a process in the double buffer. The double buffer may refer to a buffer structure that simultaneously stores and processes data. In an example, the double buffer may represent that the near memory processor may process data of a second buffer while storing data in a first buffer.

In an example, the near memory processor may perform a write operation and a read operation in a memory corresponding to the near memory processor. Performing the write operation and the read operation may include performing, by a single near memory processor, a write operation of a second process that is a succeeding process before a last read operation of a first process that is a preceding process. In an example, referring to FIG. 4, the first process may be the process 0 121 and the second process may be the process 1 122. Additionally, the last read operation of the first process may be the read operation 1 410 and the read operation 3 440. The write operation of the second process may be the write operation 1 420 and the write operation 2 450.

In an example, the read operation 1 410 and the write operation 1 420 may represent that the near memory processor may perform the first write operation 1 420 of the process 1 122 that is a succeeding process after the last read operation 1 410 of the process 0 121 that is a preceding process is terminated. In this example, an idle time may occur between execution of the process 0 121 that is the preceding process and execution of the process 1 122 that is the succeeding process. In response to the occurrence of the idle time, a total amount of time necessary for operation may unnecessarily increase. Therefore, it is possible to induce reduction in an operation time in a double buffer structure by preventing the occurrence of the idle time.

In an example, the read operation and the write operation may be distinguished from each other in the double buffer structure such that the read operation and the write operation may be simultaneously performed in the double buffer structure. Unless the read operation and the write operation are distinguished, the process 1 122 that is the succeeding process may need to wait until the last read operation 1 410 of the process 0 121 that is the preceding process is terminated. In this example, the idle time may occur between the preceding process and the succeeding process.

In an example, the read operation and the write operation may be distinguished from each other in the double buffer structure such that the write operation of the process 1 121 that is the succeeding process may be performed after the last write operation of the process 0 121 that is the preceding process is terminated. In an example, in a state in which the last write operation of the process 0 121 that is the preceding process is terminated, the write state 220 may be an idle state and the read state 230 may be a busy state. In this example, the process 1 122 that is the succeeding process may be performed. Therefore, the first write operation 2 450 of the process 1 122 that is the succeeding process may be performed before the last read operation 3 440 of the process 0 121 that is the preceding process is performed. As another example, the first write operation 2 450 of the process 1 122 that is the succeeding process may be performed at the same time at which the last read operation 3 440 of the process 0 121 that is the preceding process is performed. The first write operation 2 450 of the process 1 122 that is the succeeding process may be performed simultaneously with the read operation 2 430 of the process 0 121 that is the preceding process or may be performed after the read operation 2 430 is terminated. Therefore, the near memory processor may perform operation processing of each process without an idle time between execution of the process 0 121 that is the preceding process and execution of the process 1 122 that is the succeeding process.

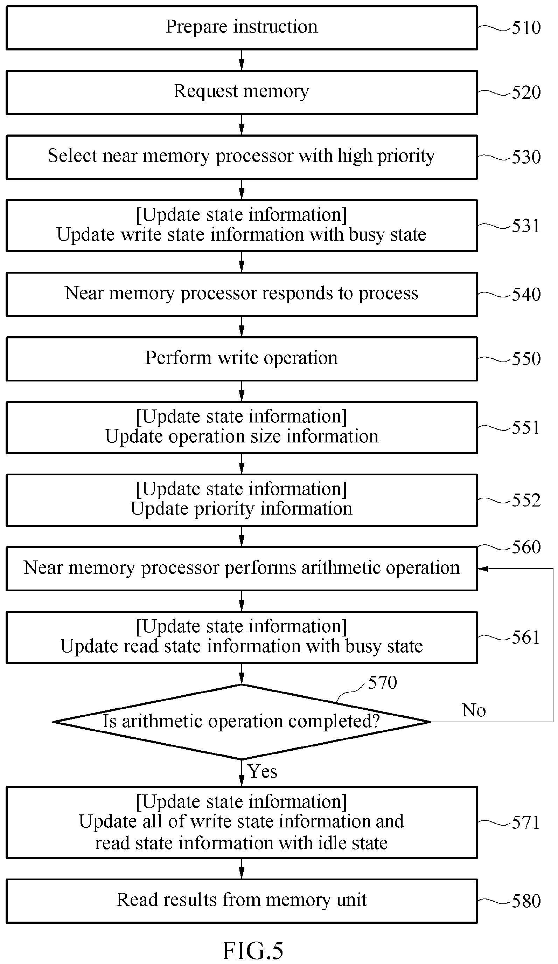

FIG. 5 is a flowchart illustrating an example process scheduling method, in accordance with one or more embodiments. The operations in FIG. 5 may be performed in the sequence and manner as shown. One or more blocks of FIG. 5, and combinations of the blocks, can be implemented by special purpose hardware-based computer that perform the specified functions, or combinations of special purpose hardware and instructions, e.g., computer or processor instructions. In addition to the description of FIG. 5 below, the descriptions of FIGS. 1-4 are also applicable to FIG. 5, and are incorporated herein by reference. Thus, the above description may not be repeated here for brevity purposes.

Referring to FIG. 5, in operation 510, a processor according to an example may prepare an instruction for an operation request of a process. When the instruction is ready in operation 510, the processor may request a memory in operation 520. In an example, requesting the memory in operation 520 may refer to requesting a near memory processor corresponding to the specific memory that is to process the operation request of the process. In operation 530, the processor may select a near memory processor with high priority based on priority information. The processor may update state information about the near memory processor to which a job request is allocated. In operation 531, the processor may update write state information included in a state table from an idle state to a busy state.

In operation 540, the near memory processor may respond to the process. The near memory processor may notify the process that the operation request is received.

In operation 550, the near memory processor may perform a write operation of writing an instruction to the particular memory.

In operation 551, the processor may update operation size information included in the state table 200. In operation 552, the processor may update priority information included in the state table 200.

In operation 560, the near memory processor may perform an arithmetic operation. In an example, in a double buffer structure, the processor may update the write state that is updated with a busy state back to be an idle state after performing the arithmetic operation in operation 560. Through this, the near memory processor may perform the write operation of the process 1 122 of FIG. 4 that is the succeeding process. When the arithmetic operation is completed, an operation of reading operation results may be performed. In operation 561, the processor may update read state information of the near memory processor included in the state table 200 with a busy state.

When it is determined that the arithmetic operation is completed in operation 570, the processor may update all of the write state information and the read state information with an idle state in operation 571. As another example, in a double buffer structure, the processor may update only the read state with an idle state. In the double buffer structure, after performing operation 560, the processor updates the write state that is updated with a busy state back to be an idle state and thus, may update only the read state with an idle state.

When it is determined that the arithmetic operation is not completed in operation 570, the near memory processor may perform the arithmetic operation in operation 560 and may update read state information of the near memory processor included in the state table 200 with a busy state in operation 561.

In operation 580, the processor may perform a read operation of reading operation results from the specific memory.

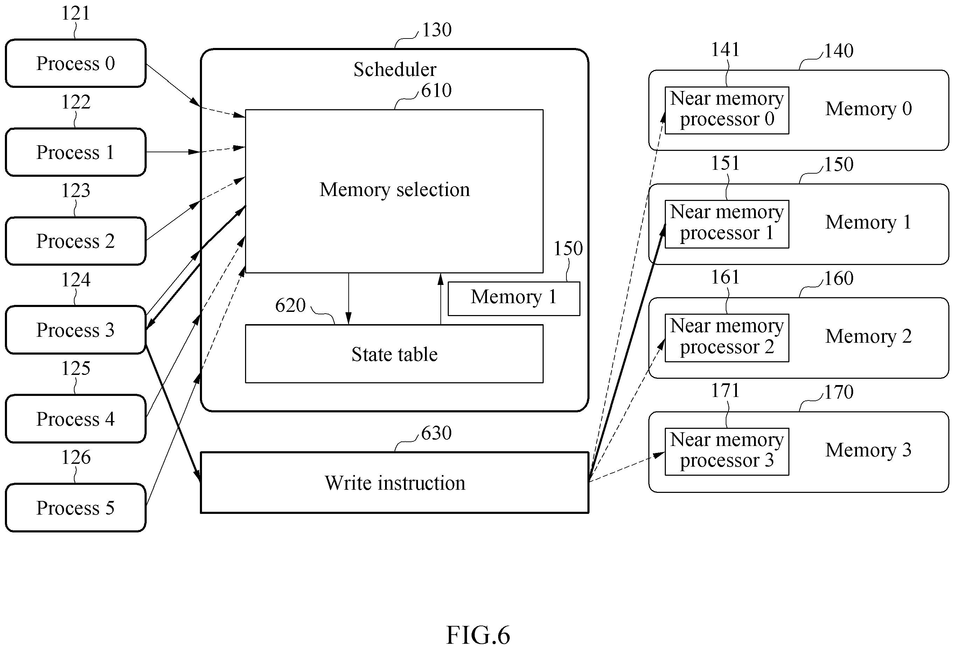

FIG. 6 illustrates an example write operation of a near memory processor, in accordance with one or more embodiments.

FIG. 6 illustrates the plurality of processes 121, 122, 123, 124, 125, and 126, the scheduler 130, a memory selection 610, a state table 620, the plurality of memories 140, 150, 160, and 170, and a write instruction 630.

In an example, the processor may generate an instruction to perform an operation using a near memory processor. When the instruction is generated in parallel from the plurality of processes 121, 122, 123, 124, 125, and 126, the processor may determine a specific memory (or a near memory processor) that is to process an operation request using the scheduler 130.

In an example, the processor may sequentially process an operation request of each process using the scheduler 130. FIG. 6 illustrates an example in which an operation request of the process 3 124 arrives first and is processed. The processor may receive the operation request of the process 3 124 and may verify identification information about the process 3 124.

In an example, the processor may determine that the memory 1 150 is available for the operation request of the process 3 124 based on the priority information included in the state table 620. That is, the processor may use the priority information included in the state table 620 for the memory selection 610 of selecting a memory that is available for the operation request of the process 3 124.

In an example, the processor may transmit, to the process 3 124, results information representing that the operation request of the process 3 124 is allocated to the memory 1 150. The processor may write an instruction to a buffer of the near memory processor 1 151 of the memory 1 150.

In an example, in response to performing the instruction write operation in the buffer, the processor may update state information included in the state table 620.

In an example, after the write operation is completed, the processor may receive an operation request instruction from the process 3 124 and may instruct the near memory processor 1 151 of the operation request. Additionally, when the write operation is completed, the processor may update state information included in the state table 620. As another example, in the double buffer structure, the processor may update a write state included in the state table 620 with an idle state in response to completion of the write operation.

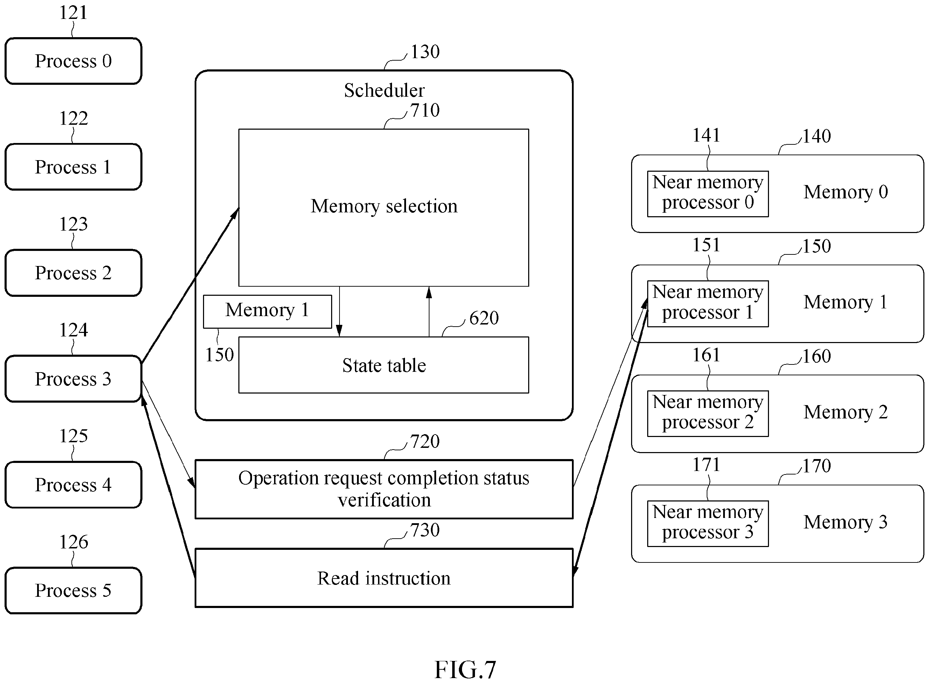

FIG. 7 illustrates an example read operation of a near memory processor, in accordance with one or more embodiments.

FIG. 7 illustrates the plurality of processes 121, 122, 123, 124, 125, and 126, the scheduler 130, a memory selection 710, the state table 620, the plurality of memories 140, 150, 160, and 170, an operation request completion status verification 720, and a read instruction 730.

In an example, in response to a request of the process 3 124, the processor may verify whether an operation is completed in the near memory processor 1 151. In an example, the processor may receive a request for the operation request completion status verification 720 from the process 3 124. In this example, the processor may verify whether the operation is completed by implementing a register included in the near memory processor 1 151.

In an example, when the operation is completed, the processor may read operation results of the near memory processor 1 151 from the memory 1 150. The processor may read the operation results of the near memory processor 1 151 from the memory 1 150 by executing the read instruction 730.

In an example, when the read operation is completed, the processor may update state information included in the state table 620.

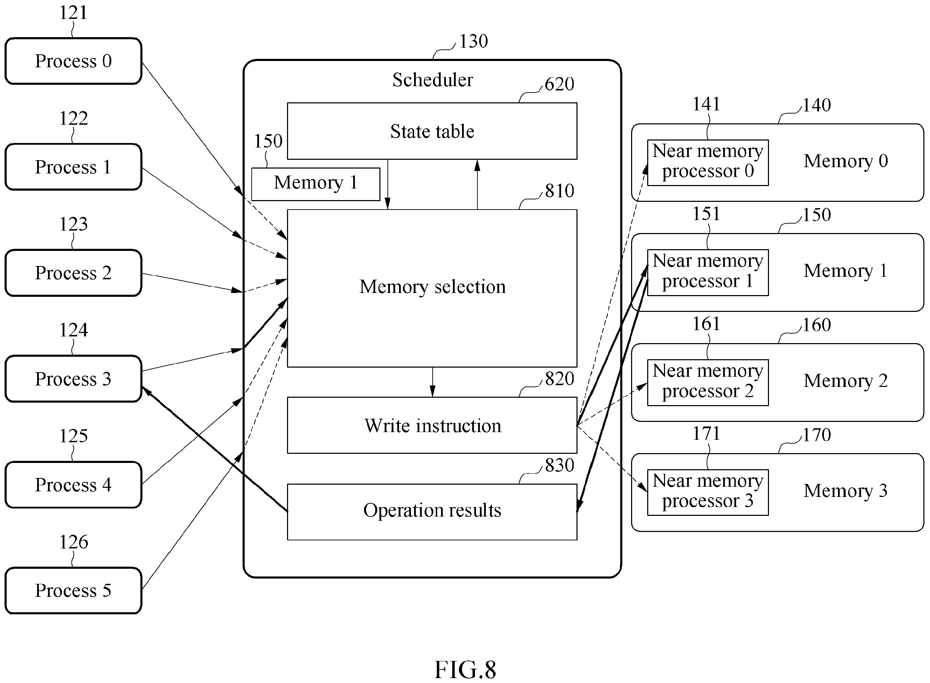

FIG. 8 illustrates an example process scheduling method when an instruction size is small, in accordance with one or more embodiments.

FIG. 8 illustrates the plurality of processes 121, 122, 123, 124, 125, and 126, the scheduler 130, a memory selection 810, the state table 620, the plurality of memories 140, 150, 160, and 170, a write instruction 820, and operation results 830.

In an example, when a size of an operation request is less than a predetermined size, the processor may store the operation request in the scheduler 130. An instruction may be generated based on the operation request of the process. The operation request may have various sizes and the instruction may also have various sizes.

In an example, the instruction may have a relatively large or small size. For example, when the size of the instruction is greater than the predetermined size, the processor may directly read and/or write the instruction outside the scheduler 130 as described above with reference to FIGS. 1 to 7, and the processor may acquire only information about an available memory (or near memory processor) using the scheduler 130. It may be efficient since, if a large-sized instruction is transmitted to the scheduler 130, a bottleneck phenomenon may occur due to a bandwidth limitation.

In an example, when the size of the instruction is less than the predetermined size, the processor may transmit the instruction from the process to the scheduler 130. In this example, although the instruction is transmitted, a bottleneck phenomenon may be less likely to occur. Therefore, the processor may receive the instruction from the process and may transmit the instruction to the scheduler 130, and the processor may receive only operation results from the scheduler 130. For example, the processor may receive the operation request of the process 3 124 and may perform the memory selection 810 of selecting a memory to process the operation request. When the memory 1 150 is selected, the processor may transmit the write instruction 820 to the scheduler 130. The processor may transmit, to the near memory processor 1 151, the write instruction 820 stored in the scheduler 130. The processor may read the operation results 830 of the near memory processor 1 151 and may store the operation results 830 in the scheduler 130. The processor may read the operation results 830 stored in the scheduler 130 and may transmit the same to the process 3 124.

In an example, since the processor may store an instruction and operation results in the scheduler 130, the processor may queue the instruction for each near memory processor. The processor may improve utilization of a plurality of near memory processors by immediately allocating an operation request to an available near memory processor.

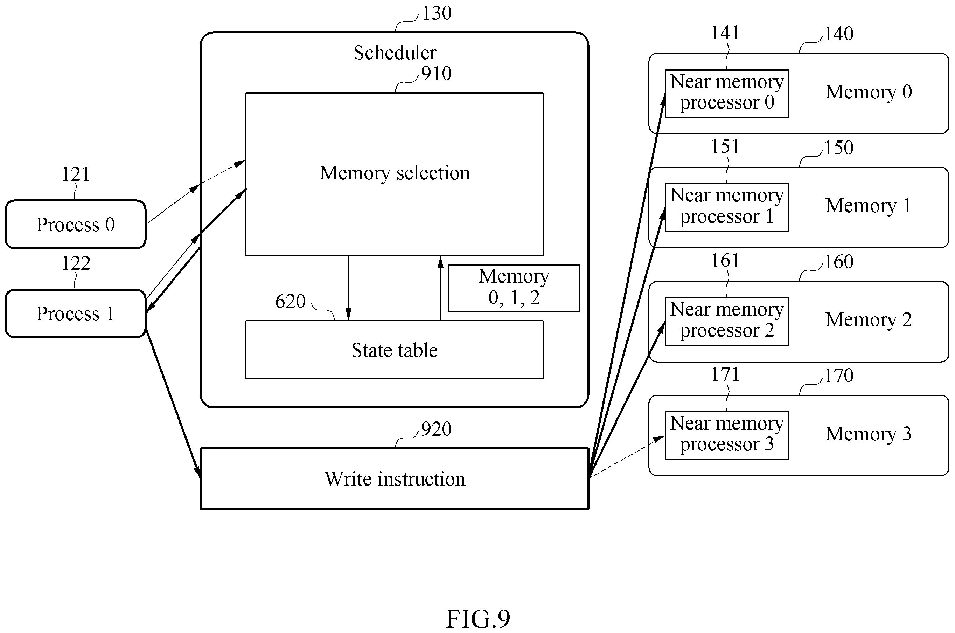

FIG. 9 illustrates an example process scheduling method when a number of processes is less than a number of memories, in accordance with one or more embodiments.

FIG. 9 illustrates the process 0 121, the process 1 122, the scheduler 130, a memory selection 910, the state table 620, a write instruction 920, and the plurality of near memory processors 141, 151, 161, and 171.

In an example, a number of processes may be less than a number of memories. In an example, referring to FIG. 9, the number of processes is two, the process 0 121 and the process 1 122, and the number of memories may be four, the memory 0 140, the memory 1 150, the memory 2 160, and the memory 3 170.

In an example, when the number of the plurality of processes is greater than the number of the plurality of near memory processors, the processor may allocate at least one operation request of a process to at least one near memory processor. In an example, the processor may receive three operation requests from the process 1 122. The processor may determine near memory processors to process the three operation requests by implementing the scheduler 130. The processor may allocate the operation requests of the process 1 122 to the near memory processor 0 141, the near memory processor 1 151, and the near memory processor 2 161 based on priority information. In another example, the processor may receive a single operation request from the process 1 122 and may receive a request for allocating a plurality of near memory processors to process a single operation request from the process 1 122. To process the single operation request, the processor may allocate the near memory processor 0 141, the near memory processor 1 151, and the near memory processor 2 161.

When the number of processes is greater than or equal to the number of memories, the processor may allocate an operation request to a near memory processor through the method described above with FIGS. 1 to 7.

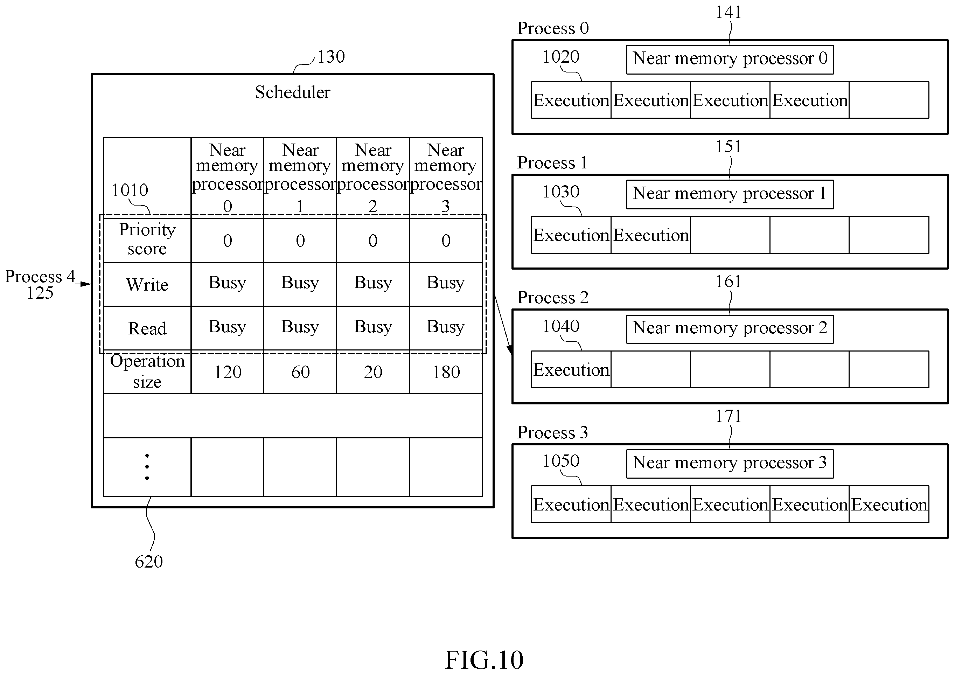

FIG. 10 illustrates an example process scheduling method when all near memory processors are performing an operation, in accordance with one or more embodiments.

FIG. 10 illustrates the process 4 125, the scheduler 130, priority score 1010, the state table 620, the plurality of near memory processors 141, 151, 161, and 171, a required operation time 1020 of the near memory processor 0 141, a required operation time 1030 of the near memory processor 1 151, a required operation time 1040 of the near memory processor 2 161, and a required operation time 1050 of the near memory processor 3 171.

In an example, when all the near memory processors are performing an operation, the processor may determine a near memory processor that is expected to end first an operation request currently being processed based on required operation time information. In an example, the processor may receive an operation request of the process 4 125. The processor may allocate the operation request to a near memory processor based on the priority score 1010 included in state information. In an example, all the plurality of near memory processors 141, 151, 161, and 171 may be performing an operation. In an example, the near memory processor 0 141 may be processing an operation request of the process 0 121, the near memory processor 1 151 may be processing an operation request of the process 1 122, the near memory processor 2 161 may be processing an operation request of the process 2 123, and the near memory processor 3 171 may be processing an operation request of the process 3 124. In this example, all the plurality of near memory processors may have the same priority score 1010 as 0. When all the near memory processors are performing an operation, the processor may determine a near memory processor to which an operation request is to be allocated based on required operation time information. The required operation time information may include time information that is calculated based on operation size information. In an example, the required operation time 1020 of the near memory processor 0 141 may be 4, the required operation time 1030 of the near memory processor 1 151 may be 2, the required operation time 1040 of the near memory processor 2 161 may be 1, and the required operation time 1050 of the near memory processor 3 171 may be 5. The processor may allocate the operation request of the process 4 125 to the near memory processor 2 161 that is expected to end first the operation. In an example, the near memory processor 2 161 may process the operation request of the process 4 125 after completing the operation request of the process 2 123 currently being performed.

FIG. 11 illustrates an example process scheduling method when a plurality of near memory processors has the same priority, in accordance with one or more embodiments.

FIG. 11 illustrates the process 4 125, the scheduler 130, priority score 1130 of the near memory processor 2 161 and the near memory processor 3 171, the state table 620, the plurality of near memory processors 141, 151, 161, and 171, a channel 1 1110, and a channel 2 1120.

In an example, when at least two near memory processors have the same priority based on priority information thereof, the processor may allocate operation requests to a near memory processor based on channel information of each of the near memory processors.

In an example, the processor may receive an operation request of the process 4 125. The processor may refer to the state table 620 included in the scheduler 130. All the near memory processor 2 161 and the near memory processor 3 171 may have the highest priority score 1130 as 20 points. The near memory processor 0 141 and the near memory processor 1 151 may have the priority score 1130 of 0, and may not currently process the operation request. Therefore, the processor may allocate the operation request to one of the near memory processor 2 161 and the near memory processor 3 171 having the same priority score 130. In this example, the processor may determine a near memory processor to which the operation request is to be allocated based on channel information of each of the near memory processor 2 161 and the near memory processor 3 171. In an example, the near memory processor 0 141, the near memory processor 1 151, and the near memory processor 2 161 may be included in the channel 1 1110. Additionally, the near memory processor 3 171 may be included in the channel 2 1120. The near memory processor 2 161 may be present in the same channel with the near memory processor 0 141 and the near memory processor 1 151 that are currently performing an operation. In this example, since operation results of the near memory processor 0 141 and the near memory processor 1 151 are being transmitted using the channel 1 1110, a bottleneck phenomenon may occur when transmitting operation results of the near memory processor 2 161. Therefore, the processor may allocate a job request of the process 4 125 to the near memory processor 3 171 included in the channel 2 1120 that is not currently in use.

In an example, since a job request is allocated to a near memory processor using channel information, it is possible to prevent an operation processing time from increasing due to a bottleneck phenomenon that occurs when operation results of a plurality of near memory processors are transmitted and received through a single channel.

The scheduler 130, memories 140, 150, 160, and 170, memory processors 141, 151, 161, 171, and other devices, and other components described herein are implemented as, and by, hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods that perform the operations described in this application, and illustrated in FIGS. 1-11, are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller, e.g., as respective operations of processor implemented methods. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that be performed by the hardware components and the methods as described above. In one example, the instructions or software include machine code that is directly executed by the one or more processors or computers, such as machine code produced by a compiler. In another example, the instructions or software include higher-level code that is executed by the one or more processors or computers using an interpreter. The instructions or software may be written using any programming language based on the block diagrams and the flow charts illustrated in the drawings and the corresponding descriptions in the specification, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), EEPROM, RAM, DRAM, SRAM, flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors and computers so that the one or more processors and computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent to one of ordinary skill in the art, after an understanding of the disclosure of this application, that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, the scope of the disclosure is defined not by the detailed description, but by the claims.

## Claims

1. A processor-implemented method, the method comprising:
receiving operation requests from a plurality of processes;
determining priority information of a plurality of near memory processors based on predetermined state information of a plurality of memories which correspond to the plurality of near memory processors;
allocating the received operation requests to at least one near memory processor of the plurality of near memory processors based on the determined priority information; and
updating state information of at least one memory of the plurality of memories corresponding to the at least one near memory processor in a state table.

2. The method of claim 1, wherein the plurality of memories comprise at least one of a memory rank, a memory bank, a dual in-line memory module, DIMM, and a single in-line memory module, SIMM.

3. The method of claim 1 or 2, wherein the state information comprises state information regarding the plurality of near memory processors which respectively correspond to each of the plurality of memories.

4. The method of one of claims 1 to 3, wherein the state information comprises at least one of priority information, write state information, read state information, operation size information, required operation time information, operation target data identification information, memory temperature information, and/or channel information.

5. The method of claim 4, wherein the priority information comprises information that is determined based on at least one of the write state information, the read state information, the required operation time information, the operation size information, the memory temperature information, and/or the channel information, or
wherein the priority information comprises information that is determined by assigning a weight to the write state information and the read state information.

6. The method of one of claims 1 to 5, wherein the allocating of the operation requests to the at least one near memory processor comprises allocating the operation requests to a near memory processor of the plurality of near memory processors configured to end first an operation request currently being processed based on required operation time information, when all near memory processors are performing an operation, or
wherein the allocating of the received operation requests to the at least one near memory processor comprises allocating the received operation requests to a near memory processor, based on channel information of each of at least two near memory processors, when the at least two near memory processors have a same priority based on priority information of the at least two memory processors.

7. The method of one of claims 1 to 6, wherein the allocating of the received operation requests to the at least one near memory processor comprises:
determining a near memory processor among the plurality of near memory processors to process the received operation requests based on write information and read information of the plurality of near memory processors; and
allocating the received operation requests to the determined near memory processor.

8. The method of one of claims 1 to 7, wherein the plurality of processes comprise processes to which a plurality of batches divided from a received job request is respectively allocated, and
wherein the batch is configured to have a size that is determined based on size information of the received job request and resource information of the at least one memory.

9. The method of one of claims 1 to 8, further comprising:
by a near memory processor, of the at least one near memory processor, to which the operation request is allocated, performing a write operation and a read operation in a memory of the plurality of memories corresponding to the near memory processor,
wherein the performing of the write operation and the performing of the read operation comprise, by the near memory processor, performing a write operation of a second process that is a succeeding process before a last read operation of a first process that is a preceding process.

10. The method of one of claims 1 to 9, further comprising:
storing an operation request of the received operation requests in a scheduler, comprising at least a memory, when a size of the operation request is less than a predetermined size.

11. The method of one of claims 1 to 10, wherein the allocating of the received operation requests to the at least one near memory processor based on the determined priority information comprises allocating at least one operation request of the process to at least one near memory processor when a number of the plurality of near memory processors is greater than a number of the plurality of processes.

12. A non-transitory computer-readable storage medium storing instructions that, when executed by a processor of an apparatus, cause the processor to:
receive operation requests from a plurality of processes;
determine priority information of a plurality of near memory processors based on predetermined state information of a plurality of memories which correspond to the plurality of near memory processors;
allocate the received operation requests to at least one near memory processor based on the determined priority information; and
update state information of at least one memory of the plurality of memories corresponding to the at least one near memory processor in a state table.

13. The computer-readable storage medium of claim 12, wherein the apparatus is an electronic device.

14. An apparatus, comprising:
a scheduler, comprising at least a memory; and
a processor configured to:
divide a job request into a plurality of batches corresponding to a plurality of processes and allocate the plurality of processes to a plurality of near memory processors based on a state table of the scheduler,
wherein the allocating the plurality of processes to the plurality of near memory processors comprises:
receiving state information of each of the plurality of near memory processors from the scheduler; and
determining a near memory processor to which an operation request of one of the plurality of processes is to be allocated based on write state information and read state information of the plurality of near memory processors.

15. The apparatus of claim 14, wherein the determined near memory processor is configured to perform a write operation of a second process that is a succeeding process before a last read operation of a first process that is a preceding process, and
wherein the read operation and the write operation are performed simultaneously.
